# EUROPÄISCHE PATENTANMELDUNG

(11) **EP 2 505 563 A2**
(43) Veröffentlichungstag der Anmeldung: **03.10.2012**
(21) Anmeldenummer: 12000445.2
(22) Anmeldetag: 25.01.2012
(51) Int. Cl.: C03B 23/025

(54) **Verfahren und Vorrichtung zum Biegen von flächigen Materialien**

(30) Priorität: 31.03.2011 DE 102011015702
(71) Anmelder: Elino Industrie-Ofenbau GmbH, 52355 Düren (DE)
(72) Erfinder: Meyer, Willi, 52385 Nideggen (DE); Schäufler, Dieter, 78259 Mühlhausen (DE)
(74) Vertreter: Hauck Patent- und Rechtsanwälte

(57) **Zusammenfassung**

Es wird ein Verfahren zum Biegen von flächigen Materialien, insbesondere von Glasscheiben, beschrieben, ferner eine Vorrichtung zur Durchführung eines derartigen Verfahrens. Das flächige Material wird in einer Behandlungskammer auf einer Auflage angeordnet, die sich aus einer Vielzahl von unabhängig voneinander auf- und abbewegbaren Auflageelementen zusammensetzt. Nachdem das flächige Material durch Temperaturerhöhung in einen plastisch verformbaren Zustand gebracht worden ist, wird durch Anheben oder Absenken von einzelnen Auflageelementen eine Auflage für das flächige Material erzeugt, die die Biegekontur für das flächige Material vorgibt. Auf diese Weise lassen sich flächige Materialien mit hoher Reproduziergenauigkeit biegen, wobei auf einfache Weise unterschiedliche Biegekonturen erreicht werden können. Der Biegevorgang kann durch gezieltes lokales Erhitzen der zu verformenden Stellen des Materiales unterstützt werden.

## Beschreibung

Die vorliegende Erfindung betrifft ein Verfahren zum Biegen von flächigen Materialien, insbesondere von Glasscheiben, die sich durch Temperaturerhöhung plastisch verformen. Die Erfindung ist ferner auf eine Vorrichtung zur Durchführung eines derartigen Verfahrens gerichtet.

Bekannte derartige Biegeverfahren arbeiten in der Regel mit teuren Formen, so dass aufwendige Vorrichtungen zur Durchführung von derartigen Verfahren erforderlich sind. Darüber hinaus ist es bei solchen Vorrichtungen nur mit relativ großem Aufwand möglich, Biegewinkel und/oder Biegeradien zu verstellen. Mit anderen Worten, mit solchen Vorrichtungen lassen sich nicht ohne Weiteres andere Biegekonturen herstellen, ohne dass aufwendige Umrüstvorgänge durchgeführt werden müssen.

Der vorliegenden Erfindung liegt die Aufgabe zugrunde, ein Verfahren der eingangs genannten Art zu schaffen, mit dem sich flächige Materialien mit hoher Reproduzierbarkeit mit auf einfache Weise variierbaren Biegekonturen biegen lassen.

Diese Aufgabe wird erfindungsgemäß bei einem Verfahren der angegebenen Art durch die folgenden Schritte gelöst:
Einführen des flächigen Materiales in eine Behandlungskammer und Lagerung desselben auf einer Auflage, die sich aus einer Vielzahl von unabhängig voneinander auf- und abbewegbaren Auflageelementen zusammensetzt;
Erhöhen der Temperatur des flächigen Materiales und Bringen desselben in einen plastisch verformbaren Zustand;
selektives Anheben und/oder Absenken von Auflageelementen zum Biegen des flächigen Materiales;
Absenken der Temperatur des gebogenen Materiales zum Erstarrenlassen desselben; und
Herausführen des gebogenen Materiales aus der Behandlungskammer.

Die erfindungsgemäße Lösung basiert auf dem Grundgedanken, das flächige Material auf einer Auflage innerhalb einer Behandlungskammer anzuordnen und die Auflage aus einer Vielzahl von unabhängig voneinander auf- und abbewegbaren Auflageelementen auszubilden. Diese Vielzahl der Auflageelemente wird in Abhängigkeit von der gewünschten Biegekontur selektiv auf- bzw. abbewegt, nachdem das flächige Material durch Temperaturerhöhung in einen plastisch verformbaren Zustand gebracht worden ist oder während es in diesen Zustand gebracht wird. Das Material passt sich dann an die von den einzelnen Auflageelementen vorgegebene Kontur an und wird auf diese Weise gebogen bzw. verformt. Dabei können, je nach der gewünschten Biegekontur, beliebig viele Auflageelemente gemeinsam oder individuell angehoben bzw. abgesenkt werden, so dass sich beliebige Biegekonturen des zu biegenden flächigen Materiales einstellen lassen. Auf diese Weise können nahezu beliebige Biegewinkel und/oder Biegeradien eingestellt werden. Beispielsweise kann eine Reihe von nebeneinander angeordneten Auflageelementen angehoben oder abgesenkt werden, so dass sich eine Biegeachse für das flächige Material einstellen lässt. Zweidimensionale aber auch dreidimensionale Biegevorgänge sind daher möglich, im Extremfall auch eindimensionale (punktuelle) Verformungsvorgänge.

Nach dem erfolgten Biegevorgang wird die Temperatur des gebogenen Materiales abgesenkt, oder man lässt die Temperatur des gebogenen Materiales absinken, damit das Material wieder erstarrt. Nach entsprechender Abkühlung wird es aus der Behandlungskammer herausgeführt. Die entsprechenden Abkühlungszeiten werden so gewählt, dass das gebogene Material auf dauerhafte Weise bei Raumtemperatur seine gebogene Form beibehält.

Mit dem erfindungsgemäßen Verfahren lässt sich eine hohe Reproduziergenauigkeit des Biegevorganges erreichen. Es ist eine flexible Biegekonturgebung möglich, da durch die Aufteilung in eine Vielzahl von Auflageelementen lokale Biegevorgänge durchführbar sind, wobei die Biegekonturen (Biegeradien und/oder Biegewinkel) einstellbar sind. Die Auflage für das flächige Material innerhalb der Behandlungskammer kann beliebig positioniert sein, insbesondere waagerecht, aber auch schräg oder senkrecht.

Weiterbildungen des erfindungsgemäßen Verfahrens gehen aus den Unteransprüchen hervor.

In Weiterbildung der Erfindung wird das flächige Material auf der Vielzahl der Auflageelemente mechanisch oder durch Unterdruckbeaufschlagung fixiert. Auf diese Weise wird sichergestellt, dass das flächige Material während des Anhebens und/oder Absenkens der einzelnen Auflageelemente keine Positionsveränderung erfährt.

Bei der Durchführung des erfindungsgemäßen Verfahrens kann auch der Druck in der Behandlungskammer während des Biegevorganges gegenüber Atmosphärendruck erhöht und/oder erniedrigt werden, je nach den gewünschten Behandlungskonditionen.

Das erfindungsgemäße Biegeverfahren kann auch mit einem Härtungsverfahren kombiniert werden. Hierbei wird das flächige Material nach dem Biegevorgang in der Behandlungskammer durch Temperatur- und/oder Druckveränderung gehärtet. Dabei werden die einzelnen Auflageelemente vorzugsweise erst nach abgeschlossenem Härtungsvorgang in ihre Ausgangsstellung, in der sie normalerweise eine ebene Auflage bilden, zurückgeführt.

Bei einer besonders bevorzugten Ausführungsform des erfindungsgemäßen Verfahrens wird das flächige Material während seiner Lagerung linear unterstützt und zum Biegen linear angehoben und/oder abgesenkt. Hierbei kommen beispielsweise stangen/rohrförmige Auflageelemente zum Einsatz, die das Material unterstützen. Eine Vielzahl von derartigen linearen Elementen ist hierbei nebeneinander angeordnet, und zur Durchführung des Biegevorganges werden bestimmte lineare Elemente über verschiedene Distanzen angehoben bzw. abgesenkt, so dass auf diese Weise ein zweidimensionaler Biegevorgang stattfinden kann, der zu winklig bzw. gekrümmt ausgebildeten flächigen Materialien, beispielsweise Flachglasscheiben, führt.

Besonders bevorzugt wird eine Ausführungsform, bei der das flächige Material an den Stellen, die verformt bzw. gebogen werden sollen, lokal stärker erhitzt wird, wobei die lokale Erhitzung insbesondere durchgeführt wird, kurz bevor die Auflageelemente selektiv angehoben und/oder abgesenkt werden. Hierbei wird das flächige Material an den Stellen, die verformt bzw. gebogen werden sollen, viskoser und lässt sich daher an diesen Stellen verformen. Es hat den Vorteil, dass erfindungsgemäß eine gezielte Verformung nur an den gewünschten Stellen erreicht wird. Flächen, die nicht verformt werden sollen, bleiben daher in ihrem ursprünglichen Zustand (eben) und werden nicht unkontrolliert gekrümmt und zurückgebogen. Es wird daher eine besonders gute optische Qualität der entsprechenden Produkte (Glasscheiben) erreicht, da beispielsweise weniger Verzerrungen auftreten. Das Material nimmt die gewünschte Endform besonders gut an, und es entstehen weniger Abdrücke.

Diese lokale Erhitzung des flächigen Materiales wird insbesondere mit einem Heißgasstrom durchgeführt. Vorzugsweise wird dabei Gas (Luft) der Behandlungskammer entnommen und nach zusätzlichem Erhitzen als Heißgasstrom wieder in die Behandlungskammer eingeführt. Bei dieser Ausführungsform muss daher kein zusätzlicher Gasstrom bereitgestellt werden, dessen Zusammensetzung möglicherweise vom Gas innerhalb der Behandlungskammer abweichen könnte.

Bei noch einer weiteren Ausführungsform des erfindungsgemäßen Verfahrens wird das aus der Behandlungskammer geführte gebogene Material einer Schockkühlung ausgesetzt. Auf diese Weise kann beispielsweise gebogenes Glas bei Bedarf durch die Schockkühlung hinter der Behandlungskammer zu Sicherheitsglas (ESG) veredelt werden. Hierbei wird das gebogene Material beispielsweise mit kalter Luft von beiden Seiten angeblasen. So kühlen die Glasoberflächen im Gegensatz zum Glasinneren rasch herunter, und es stellt sich der für Sicherheitsglas charakteristische Eigenspannungszustand im Glas ein.

Die vorstehend genannte Aufgabe wird ferner durch eine Vorrichtung zum Biegen von flächigen Materialien gelöst. Eine solche Vorrichtung zeichnet sich dadurch aus, dass sich Biegevorgänge mit hoher Reproduziergenauigkeit durchführen lassen und dass sich verschiedenartige Biegekonturen mit relativ geringem Aufwand einstellen lassen, so dass durch entsprechende Einstellvorgänge mit ein und derselben Vorrichtung flächige Materialien auf unterschiedliche Weise gebogen werden können.

Die erfindungsgemäß ausgebildete Vorrichtung umfasst die folgenden Bestandteile:
Eine Behandlungskammer, in der sich eine Auflage befindet, die sich aus einer Vielzahl von unabhängig voneinander auf-und abbewegbaren Auflageelementen zusammensetzt;
eine Einrichtung zum Erhitzen des flächigen Materiales in der Behandlungskammer;
eine Vielzahl von Hubelementen, von denen jeweils mindestens eines einem Auflageelement zugeordnet ist; und
einen Antriebsmechanismus zum selektiven Anheben und/oder Absenken von Hubelementen.

Bei der erfindungsgemäß ausgebildeten Vorrichtung ist der Antriebsmechanismus so ausgebildet, dass hiermit beliebige Hubelemente über einstellbare Distanzen anhebbar und absenkbar sind, so dass die den Hubelementen zugeordneten Auflageelemente entsprechend angehoben und/oder abgesenkt werden, um eine gewünschte Biegekontur vorzugeben. Da somit die Hubelemente individuell einstellbar und steuerbar sind, lassen sich eindimensionale, zweidimensionale oder dreidimensionale Biegekonturen oder Verformungskonturen erzielen. Im Extremfall, bei dem nur ein einziges Hubelement angehoben bzw. abgesenkt wird, ist auch eine punktuelle Verformung des flächigen Materiales möglich. Solche punktuellen Verformungen können auch in Abständen durchgeführt werden, so dass sich Materialien mit gewölbten Abschnitten herstellen lassen.

Der hier verwendete Begriff "Biegung" soll daher breit ausgelegt werden und beliebige Konturen, auch Wölbungen, Krümmungen etc., umfassen.

Vorzugsweise erstrecken sich die Hubelemente durch Führungen in der Bodenwand der Behandlungskammer bis zu dem außerhalb der Behandlungskammer angeordneten Antriebsmechanismus. Bei dieser Ausführungsform befindet sich daher der zum Anheben bzw. Absenken der einzelnen Auflageelemente erforderliche Antriebsmechanismus außerhalb der Behandlungskammer. Natürlich sind die entsprechenden Durchgänge bzw. Führungen für die Hubelemente vorzugsweise gasdicht ausgebildet, so dass die in der Behandlungskammer aufrechterhaltene Gasatmosphäre nicht entweichen kann.

Der Antriebsmechanismus wird vorzugsweise von mindestens einem Hubkurbeltrieb gebildet. Ein einziger Hubkurbeltrieb kann zum Antreiben von mehreren Hubelementen dienen. Besonders bevorzugt wird eine Lösung, bei der die Hubelemente über Kurbelarme mit Exzenterarmen eines gemeinsamen Kurbeltriebes verbunden sind. Um hierbei eine Biegekontur vorgeben zu können, ist die Länge der Exzenterarme einstellbar. Dabei kann beispielsweise die Länge der Exzenterarme so eingestellt werden, dass in einer Nullgradstellung des Kurbeltriebes sämtliche Auflageelemente in einer Ebene angeordnet sind, während sich nach Drehung des Kurbeltriebes um 0° bis 180°, insbesondere 45° oder 90°, die gewünschte Absenkung von bestimmten Auflageelementen entsprechend der gewünschten Biegekontur ergibt.

Die Auflageelemente selbst können flächig, linear oder im Extremfall auch punktförmig ausgebildet sein. Bei einer bevorzugten linearen Ausgestaltung werden die Auflageelemente von stangen/rohrförmigen Elementen gebildet, die in ihren Endbereichen mit jeweils einem Hubelement verbunden sind. Die Hubelemente der benachbarten Endebereiche werden dabei vorzugsweise von jeweils einem Kurbeltrieb angetrieben, so dass sich entsprechende Biegeachsen vorgeben lassen.

Der Auflage sind zweckmäßigerweise Fixiereinrichtungen für das zu behandelnde flächige Material zugeordnet. Es kann sich hierbei beispielsweise um mechanische Fixiereinrichtungen, wie Bügel, handeln, die die Positionierung des flächigen Materiales auf der Auflage während des Biegevorganges sicherstellen. Die Fixiereinrichtungen können aber auch beispielsweise von Einrichtungen gebildet sein, die das flächige Material mit Unterdruck beaufschlagen und dieses auf diese Weise auf der Auflage sichern. Der Unterdruck kann dabei über die als Rohre ausgebildeten Auflageelemente zugeführt werden.

Durch Einstellung bzw. Verstellung des Antriebsmechanismus für die Hubelemente, insbesondere durch Einstellung bzw. Verstellung der Länge der Exzenterarme oder Kurbelarme von Kurbeltrieben, lässt sich somit eine flexible Biegekonturgebung erreichen. Der Antriebsmechanismus sichert eine Zwangsbewegung der Hubelemente in allen Biegestellungen, so dass eine hohe Reproduziergenauigkeit erzielbar ist. Die jeweiligen Hubelemente sind individuell einstellbar. Die Auflageelemente sind vorzugsweise so gestaltet, dass sie auf einfache Weise ausgetauscht werden können, so dass die Auflageelemente in ihrer Form, Beweglichkeit, Funktionsweise, Anordnung etc. an das zu behandelnde Material angepasst werden können. Über die vorgesehenen Hubelemente lassen sich entsprechende Unterdruckanschlüsse realisieren, ferner Thermoelemente pro Hubelement, Zusatzheizungen an den Hubelementen, Luftanschlüsse an die Hubelemente etc.

Auch ist der Anbau von mechanischen Biegeführungen an den Hubelementen über der freien Glasscheibenseite möglich.

Bei einer weiteren Ausführungsform der erfindungsgemäßen Vorrichtung ist die Behandlungskammer mit Einrichtungen zum stärkeren lokalen Erhitzen des flächigen Materiales an den Stellen, die verformt werden sollen, versehen. Die Behandlungskammer weist dabei insbesondere Düseneinrichtungen zum Beaufschlagen der Stellen des flächigen Materiales, die verformt bzw. gebogen werden sollen, mit einem Heißgasstrom auf. Diese Düseneinrichtungen sind vorzugsweise beweglich ausgebildet, so dass beliebige Stellen des zu verformenden flächigen Materiales gezielt mit Heißluft beaufschlagt werden können, um die Viskosität des flächigen Materiales auf gezielte Weise an diesen Stellen zu erhöhen. In der Behandlungskammer können dabei eine oder mehrere Düseneinrichtungen vorgesehen sein, so dass auch gleichzeitig mehrere Stellen des flächigen Materiales gezielt stärker erhitzt werden können.

Bei einer speziellen Ausführungsform weist die Vorrichtung Einrichtungen zur Gasentnahme aus der Behandlungskammer, zum Erhitzen des Gases und zur Förderung des Gases zu den Düseneinrichtungen in der Behandlungskammer auf. Über die Gasentnahmeeinrichtungen wird Gas aus der Behandlungskammer entnommen und außerhalb der Behandlungskammer mit einem Erhitzer erhitzt. Das erhitzte Gas wird dann wieder in die Behandlungskammer zu den dort vorgesehenen Düseneinrichtungen gefördert. Die Düseneinrichtungen beaufschlagen die zu verformende Stelle bzw. die zu verformenden Stellen mit dem erhitzten Gas in Form eines Heißgasstromes (Heißluftstromes).

Noch eine andere Ausführungsform der erfindungsgemäßen Vorrichtung zeichnet sich dadurch aus, dass sie eine der Behandlungskammer nachgeordnete Einrichtung zur Schockkühlung des gebogenen Materiales besitzt. Auf diese Weise kann beispielsweise Sicherheitsglas hergestellt werden.

Die Erfindung wird nachfolgend anhand eines Ausführungsbeispieles in Verbindung mit der Zeichnung im Einzelnen erläutert. Es zeigen:
- Figur 1: einen Schnitt entlang Linie B-B in Figur 2 durch eine schematisch dargestellte Vorrichtung zum Biegen von flächigen Materialien;
- Figur 2: einen Schnitt entlang Linie A-A in Figur 1;
- Figur 3: einen Schnitt entlang Linie B-B in Figur 4, wobei sich die Vorrichtung im Biegestadium befindet;
- Figur 4: einen Schnitt entlang Linie A-A in Figur 3; und
- Figur 5: einen Vertikalschnitt durch eine weitere Ausführungsform einer Vorrichtung zum Biegen von flächigen Materialien.

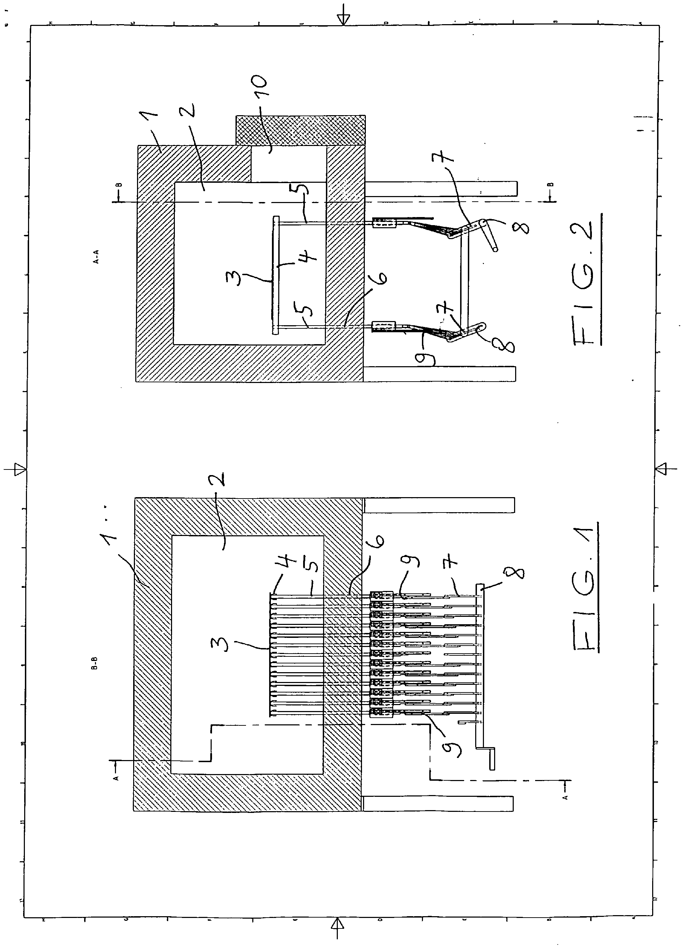

Die in Figur 1 schematisch im Schnitt dargestellte Vorrichtung zum Biegen von flächigen Materialien dient zum Biegen von Flachglas. Eine entsprechende Glasscheibe ist bei 3 dargestellt. Die Vorrichtung besitzt eine Behandlungskammer mit einer Wandung 1 und einem Innenraum 2, der einen entsprechenden Behandlungsraum bildet, in dem der Biegevorgang durchgeführt werden kann. Hierzu ist der Innenraum 2 mit einer geeigneten Gasatmosphäre versehen, deren Temperatur und ggf. deren Druck erhöht/erniedrigt werden können, um die zu biegende Glasscheibe 3 in einen plastisch verformbaren Zustand und zurück in den Ausgangszustand zu bringen.

Die Behandlungskammer 1 weist eine geeignete Eintritts- und Austrittsöffnung 10 auf, über die die zu biegende Glasscheibe 3 über geeignete Fördermittel (nicht gezeigt) in den Innenraum 2 der Behandlungskammer einführbar ist. Im Innenraum der Kammer befindet sich eine geeignete Auflage für die Glasscheibe 3, die sich aus einer Vielzahl von einzelnen Auflageelementen 4 zusammensetzt, welche als längliche Elemente in umgekehrter U-Form ausgebildet sind. Bei der hier dargestellten Ausführungsform sind 13 Auflageelemente 4 nebeneinander und im Abstand voneinander angeordnet und bilden zusammen eine Auflage für die zu biegende Glasscheibe 3.

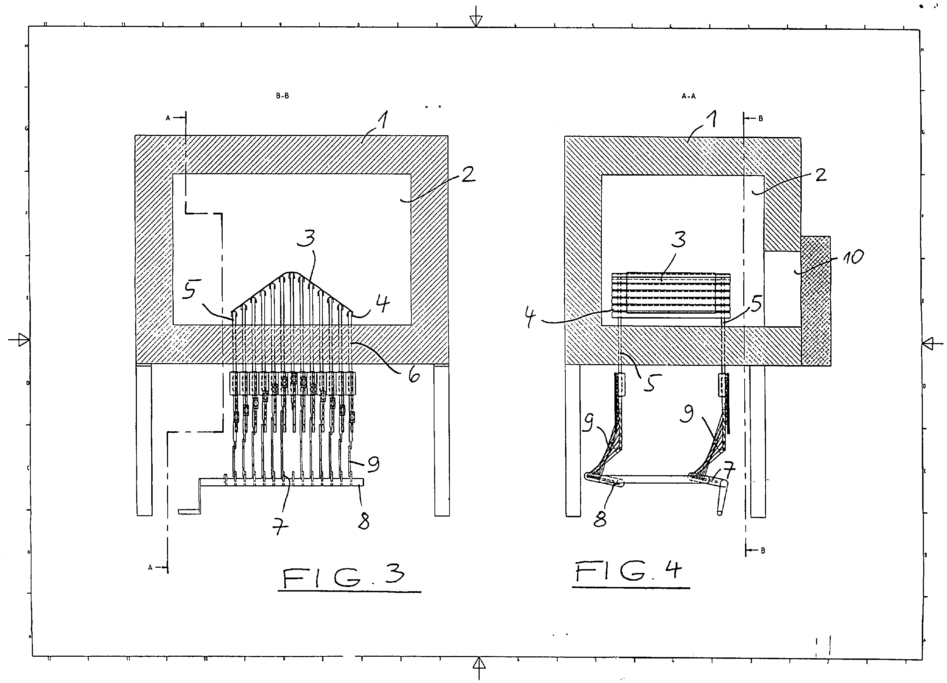

Wie Figur 2 zeigt, weist jedes Auflageelement 4 zwei Hubelemente 5 auf, die in den beiden Endbereichen des Auflageelementes 4 angeordnet sind und die Form von langen stangenförmigen Elementen besitzen. Die Auflage weist daher insgesamt 26 Hubelemente 5 auf, von denen jeweils 13 in einem Endbereich der Auflage angeordnet sind. Die Hubelemente 5 erstrecken sich durch gasdichte Öffnungen 6 der Bodenwand der Behandlungskammer nach unten in einen Bereich, in dem ein Antriebsmechanismus zum Heben und Senken der Hubelemente 5 und damit der Auflageelemente 4 angeordnet ist. Dieser Antriebsmechanismus weist zwei Kurbeltriebe 8 auf, die jeweils mit einem Exzenterarm 7 verbunden sind, welcher über einen Kurbelarm 9 mit einem Hubelement 5 in Verbindung steht. Die Exzenterarme 7 sind über ein Querelement miteinander verbunden. Die Länge der Exzenterarme 7 und der Kurbelarme 9 ist einstellbar. In Figur 1 ist zu erkennen, dass die Längen der Exzenterarme 7 und Kurbelarme 9 so abgestimmt sind, dass sich im Ausgangszustand die Auflageelemente 4 in der gleichen Höhenlage, d.h. innerhalb einer Ebene, befinden. Bei Drehen der Kurbeltriebe 8 um beispielsweise 45° ergibt sich aufgrund der abgestimmten Längen zwischen Exzenterarm 7 und Kurbelarm 9 die in Figur 3 dargestellte Position der Auflageelemente 4, die etwa der Form eines Daches entspricht. Wenn die Auflageelemente 4 in diese Stellung gebracht werden, nachdem oder während die Glasscheibe 3 in einen plastisch verformbaren Zustand gebracht worden ist, folgt die Glasscheibe 3 durch Schwerkraftwirkung den Positionen der Auflageelemente 4 und nimmt die in Figur 3 dargestellte gebogene Kontur ein. In dieser Position kann die Glasscheibe 3 nach dem Erstarren einem Härtungsvorgang unterzogen werden, nachdem die Atmosphäre in der Behandlungskammer entsprechend eingestellt worden ist. Schließlich kann die gebogene Scheibe 3 über geeignete Fördermittel wieder aus der Behandlungskammer durch die Öffnung 10 herausgeführt werden.

Der in den Figuren dargestellte Antriebsmechanismus, der hier in der Form von zwei Kurbeltrieben ausgebildet ist, ist lediglich beispielhaft. Wichtig ist, dass die Auflage für die zu biegende Glasscheibe 3 von einer Vielzahl von unabhängig voneinander auf- und abbewegbaren Auflageelementen 4 gebildet wird, welche individuell einstellbar sind (in ihrer Länge), so dass sich mit den Auflageelementen 4 beliebige Konturen verwirklichen lassen. Bei der hier dargestellten Ausführungsform ist jedes Auflageelement 4 etwa rohrförmig (U-förmig) ausgebildet und wird von zwei Hubelementen getragen. Die Auflageelemente 4 können jedoch auch flächig oder punktförmig ausgebildet sein, je nach den gewünschten Biegekonturen bzw. Krümmungen oder Wölbungen.

Allgemein kann die erfindungsgemäß ausgebildete Vorrichtung neben der beschriebenen Anlage auch als Durchlaufanlage ausgebildet sein.

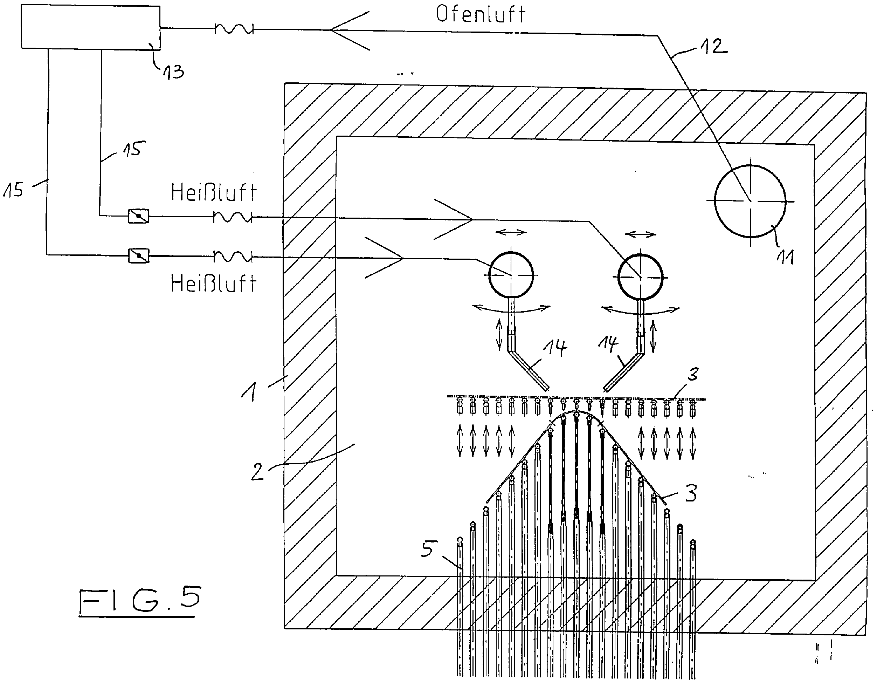

Figur 5 zeigt einen Vertikalschnitt durch eine weitere Ausführungsform einer Vorrichtung zum Biegen von flächigen Materialien. Diese Vorrichtung zeichnet sich gegenüber den vorstehend beschriebenen Ausführungsformen dadurch aus, dass sie eine Einrichtung 11 zur Entnahme von Gas aus dem Innenraum 2 der Behandlungskammer aufweist. An diese in Figur 5 nur schematisch dargestellte Entnahmeeinrichtung 11 ist eine Leitung 12 angeschlossen, mit der das aus der Behandlungskammer entnommene Gas (Luft) einem Erhitzer 13 zugeführt wird. In dem außerhalb der Behandlungskammer angeordneten Erhitzer 13 wird das Gas erhitzt und über weitere Leitungen 15 wieder in die Behandlungskammer eingeführt. Das erhitzte Gas gelangt zu zwei Düseneinrichtungen 14, mit dem es als Heißgasstrom gezielt auf die zu verformenden Stellen oder die zu verformende Stelle des flächigen Materiales, d. h. der zu biegenden Glasscheibe 3, geführt wird. Hierdurch wird die Viskosität der Glasscheibe 3 an der zu biegenden Stelle gezielt erhöht, so dass eine örtlich begrenzte Verformung eintritt, während die übrigen Bereiche der Glasscheibe nicht mit verformt werden. Im unteren Teil der Figur ist die Glasscheibe 3 im verformten Zustand dargestellt.

## Patentansprüche

1. Verfahren zum Biegen von flächigen Materialien, insbesondere von Glasscheiben, die sich durch Temperaturerhöhung plastisch verformen, mit den folgenden Schritten:
Einführen des flächigen Materiales in eine Behandlungskammer und Lagerung desselben auf einer Auflage, die sich aus einer Vielzahl von unabhängig voneinander auf- und abbewegbaren Auflageelementen zusammensetzt;
Erhöhen der Temperatur des flächigen Materiales und Bringen desselben in einen plastisch verformbaren Zustand;
selektives Anheben und/oder Absenken von Auflageelementen zum Biegen des flächigen Materiales;
Absenken der Temperatur des gebogenen Materiales zum Erstarrenlassen desselben; und
Herausführen des gebogenen Materiales aus der Behandlungskammer.

2. Verfahren nach Anspruch 1, **dadurch gekennzeichnet, dass** das flächige Material auf der Vielzahl der Auflageelemente mechanisch oder durch Unterdruckbeaufschlagung fixiert wird.

3. Verfahren nach Anspruch 1 oder 2, **dadurch gekennzeichnet, dass** der Druck in der Behandlungskammer während des Biegevorganges gegenüber Atmosphärendruck erhöht und/oder erniedrigt wird.

4. Verfahren nach einem der vorangehenden Ansprüche, **dadurch gekennzeichnet, dass** das flächige Material nach dem Biegevorgang in der Behandlungskammer durch Temperatur- und/oder Druckveränderung gehärtet wird.

5. Verfahren nach einem der vorangehenden Ansprüche, **dadurch gekennzeichnet, dass** das flächige Material während seiner Lagerung linear unterstützt und zum Biegen linear angehoben und/oder abgesenkt wird.

6. Verfahren nach einem der vorangehenden Ansprüche, **dadurch gekennzeichnet, dass** das flächige Material an den Stellen, die verformt werden sollen, lokal stärker erhitzt wird, wobei die lokale Erhitzung insbesondere durchgeführt wird, kurz bevor die Auflageelemente selektiv angehoben und/oder abgesenkt werden.

7. Verfahren nach Anspruch 6, **dadurch gekennzeichnet, dass** das flächige Material lokal mit einem Heißgasstrom erhitzt wird, wobei insbesondere Gas der Behandlungskammer entnommen und nach zusätzlichem Erhitzen als Heißgasstrom wieder in die Behandlungskammer eingeführt wird.

8. Verfahren nach einem der vorangehenden Ansprüche, **dadurch gekennzeichnet, dass** das aus der Behandlungskammer geführte gebogene Material einer Schockkühlung ausgesetzt wird.

9. Vorrichtung zum Biegen von flächigen Materialien, insbesondere von Glasscheiben, die sich durch Temperaturerhöhung plastisch verformen, mit den folgenden Bestandteilen:
Einer Behandlungskammer, in der sich eine Auflage befindet, die sich aus einer Vielzahl von unabhängig voneinander auf- und abbewegbaren Auflageelementen (4) zusammensetzt;
einer Einrichtung zum Erhitzen des flächigen Materiales in der Behandlungskammer;
einer Vielzahl von Hubelementen (5), von denen jeweils mindestens eines einem Auflageelement (4) zugeordnet ist; und
einem Antriebsmechanismus zum selektiven Anheben und/oder Absenken von Hubelementen (5).

10. Vorrichtung nach Anspruch 9, **dadurch gekennzeichnet, dass** sich die Hubelemente (5) durch Öffnungen (6) in der Bodenwand der Behandlungskammer bis zu dem außerhalb der Behandlungskammer angeordneten Antriebsmechanismus erstrecken.

11. Vorrichtung nach Anspruch 9 oder 10, **dadurch gekennzeichnet, dass** der Antriebsmechanismus von mindestens einem Hubkurbeltrieb (8) gebildet ist.

12. Vorrichtung nach einem der Ansprüche 9 bis 11, **dadurch gekennzeichnet, dass** die Hubelemente (5) über Kurbelarme (9) an Exzenterarmen (7) eines gemeinsamen Kurbeltriebes (8) verbunden sind.

13. Vorrichtung nach Anspruch 12, **dadurch gekennzeichnet, dass** die Länge der Exzenterarme (7) und/oder Kurbelarme (9) einstellbar ist.

14. Vorrichtung nach einem der Ansprüche 9 bis 13, **dadurch gekennzeichnet, dass** die Auflageelemente (4) von stangen/rohrförmigen Elementen gebildet sind, die in ihren Endbereichen mit jeweils einem Hubelement (5) verbunden sind.

15. Vorrichtung nach einem der Ansprüche 9 bis 14, **dadurch gekennzeichnet, dass** der Auflage Fixiereinrichtungen für das zu behandelnde flächige Material zugeordnet sind.

16. Vorrichtung nach einem der Ansprüche 9 bis 15, **dadurch gekennzeichnet, dass** die Behandlungskammer mit Düseneinrichtungen (14) zum Beaufschlagen der Stellen des flächigen Materiales, die verformt werden sollen, mit einem Heißgasstrom versehen ist.

17. Vorrichtung nach Anspruch 16, **dadurch gekennzeichnet, dass** sie Einrichtungen zur Gasentnahme aus der Behandlungskammer, zum Erhitzen des Gases und zur Förderung des Gases zu den Düseneinrichtungen (14) in der Behandlungskammer aufweist.

18. Vorrichtung nach einem der Ansprüche 9 bis 17, **dadurch gekennzeichnet, dass** die eine der Behandlungskammer nachgeordnete Einrichtung zur Schockkühlung des gebogenen Materiales besitzt.
